# EUROPEAN PATENT SPECIFICATION

(11) **EP 2 604 495 B1**
(45) Date of publication and mention of the grant of the patent: **09.12.2015**
(21) Application number: 12001748.8
(22) Date of filing: 27.01.2012
(51) Int. Cl.: B62D 55/065

(54) **Method and device for controlling the motion of an articulated vehicle**
Verfahren und Vorrichtung zur Steuerung der Bewegung eines Gelenkfahrzeugs
Procédé et dispositif de contrôle du mouvement d'un véhicule articulé

(30) Priority: 17.12.2011 EP 11009936
(43) Date of publication of application: 19.06.2013
(73) Proprietor: Robert Bosch GmbH, 70442 Stuttgart (DE)
(72) Inventor: Spall, David, Wyboston, Bedfordshire MK443AY (GB)
(74) Representative: Thürer, Andreas

(56) References cited:
- WO-A1-94/09548
- WO-A1-02/083482
- WO-A1-02/083483
- WO-A1-2011/005180

## Description

### Field of the invention

The invention relates to a method for controlling the motion of an articulated vehicle with at least four driven tracks and such a vehicle in which the method can be used.

### Prior art

Articulated vehicles comprising four tracks are known in the prior art. For Example, US 7,617,881 B2 discloses an articulated dozer with a four point independent suspension system between a chassis and two support frames. The chassis includes a front chassis portion and a rear chassis portion connected by an articulation joint. The vehicle is arranged so that the chassis and the two support frames fit between the tracks systems supporting and propelling the vehicle.

WO 02/083482 A1 and WO 02/083483 A1 disclose an electric drive configuration for a tracked vehicle comprises a pair of propulsion motors each in operable communication with one of a first pair of track drive sprockets for driving a pair of tracks of the tracked vehicle; a steer motor in driveable communication with a controlled differential steer gear unit positioned centrally of a pair of steering cross-shafts and in driveable communication with each shaft, the opposing ends of the steering cross-shafts being each in operable communication with one of a second pair of track drive sprockets for controlling the relative speeds of the two track to steer the tracked vehicle; the first pair of track drive sprockets being engageable with the tracks at a first end of a tracked vehicle and the second pair of track drive sprockets being engageable with the tracks at a second end of the tracked vehicle.

WO 94/09548 A1 discloses a tracked vehicle having a pair of electric drive motors each associated with one of a pair of endless track drive trains. Each train powers a track drive sprocket through a state of the art torque hub. The lightweight direct current motors are powered by a diesel engine operating an alternator, both carried by the vehicle, along with a power control and distribution unit which converts and directs the power from the alternator into a form suitable for use by the track drive motors. The motors may be used to regeneratively brake the vehicle by associated resistance to rotation by the armature rotor. The electricity generated is fed back to charge auxiliary batteries carried by the vehicle for lights, implement powering and the like.

For some applications, it is necessary to connect a front portion (tractor) and a rear portion (carriage) by means of a longitudinally extending drawbar. Such drawbars are, for example, necessary in case longitudinally extending items such as boats/lifeboats are to be transported.

WO 2011/005180 A1 discloses an articulated tracked vehicle, in accordance with the preamble features of independent claim 4. The vehicle comprises a first vehicle unit and a second vehicle unit connected by means of a control member. The first vehicle unit comprises a combustion engine, wherein the combustion engine is arranged to drive a generator for electrical generation, wherein the generator is arranged to transfer power via power transmission means to at least one electric motor of at least one electric propulsion unit. Further, WO 2011/005180 A1 discloses a driveline of the vehicle with four propulsion motors and four transmission configurations connected to four drive wheels.

In order to provide good traction capabilities and/or to reduce ground pressure on articulated vehicles complex power trains are required.

The present invention seeks to provide a simple and reliable method for improved traction control and for reducing ground pressure for articulated vehicles.

### Advantages of the Invention

A first aspect of the invention relates to a method of controlling the motion of an articulated vehicle with at least four driven tracks including the features of claim 1.

By determining the angle between the tractor and the carriage and at the same time the longitudinal and transverse forces acting on the drawbar between tractor and carriage, the correct speeds of the tracks, especially the rear tracks (carriage tracks) to assist in turning can be determined, so that transmission wind-up and track slip can be effectively minimised or eliminated. By avoiding track slip and drawbar wind-up in this way load carrying and hill climbing capabilities can be enhanced, and also lower ground pressure can be achieved. The invention provides tractive effort control of the tracks during both straight ahead motion and in turns.

The angle between the tractor and the carriage as well as the longitudinal and transverse forces acting on the drawbar can be determined simply, cost effectively and reliably. Thus, according to the invention, an advantageous traction control is realised.

The invention provides a vehicle tractive effort that is evenly distributed amongst all four tracks, whereby the vehicle load carrying capabilities are maximised on the flat and on inclines.

Advantageous embodiments of the invention are the subject matter of the dependent claims.

According to a preferred embodiment of the inventive method, once the vehicle is moving above a predetermined speed threshold value, the individual drive means of the driven tracks are controlled in such a way that the longitudinally acting force and the transversely acting force are zero or smaller than a (predeterminable) threshold value. Threshold values for the speed as well as for the longitudinally and transversely acting forces can be determined according to specific requirements, which can be dependent on the type of articulated vehicle (military vehicle, lifeboat launch vehicle etc) and on the terrain on which the vehicle is to be used.

According to a preferred embodiment of the inventive method, if it is determined that the angle between the tractor and the carriage is zero or smaller than a (predetermined) threshold value, the individual drive means of the driven tracks are controlled in such a way that the longitudinally acting force and the transversely acting force are zero or smaller than a (predeterminable) threshold value. Threshold values for the angle between tractor and carriage as well as for the longitudinally and transversely acting forces can be determined according to specific requirements, which can be dependent on the type of articulated vehicle (military vehicle, lifeboat launch vehicle etc) and on the terrain on which the vehicle is to be used.

Advantageously, the longitudinal and transversely acting forces are determined by means of load cells arranged on or at at least one end of the drawbar. This provides a reliable and cheap means for determining the longitudinal and transversely acting forces.

According to a further aspect of the invention, a track drive articulated vehicle is provided, with which the inventive method can be implemented.

Further advantages and embodiments of the invention will become apparent from the description and the appended figures.

It should be noted that the previously mentioned features and the features to be elucidated in the following are useable not only in the respectively indicated combination, but also in further combinations or taken alone, without parting from the scope of the present invention.

### In the drawings

- Figure 1: shows a schematic plan view of a four track vehicle during straight ahead motion,
- Figure 2: shows a corresponding plan view during a turn (the example shown is a left turn) and
- Figure 3: shows a (simplified) control scheme for carriage track speed control according to a preferred embodiment of the invention.

Like parts are indicated with identical reference numbers in the description below for a better understanding of the invention. Furthermore, for the sake of perceptibility of the figures, not all elements therein are designated with reference numbers. Also, in order to enhance the readability of the figures, only the components necessary or useful to describe the invention are shown. Further components of an articulated vehicle, for example chassis components, are not shown.

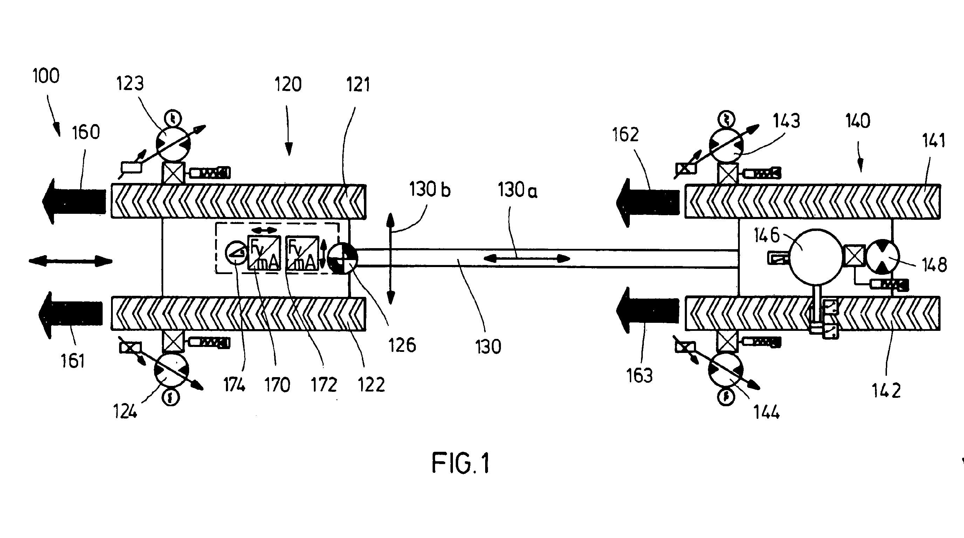

Figure 1 shows a schematic plan view of a preferred embodiment of an articulated tracked vehicle with a four track drive. The vehicle is shown during a straight ahead motion.

The vehicle (generally designated 100) comprises a front part or tractor 120 and a rear part or carriage 140.

Tractor 120 and carriage 140 are connected by means of a drawbar 130, which is non-pivotally connected to the carriage 140 and pivotally connected to tractor 120. A fifth wheel coupling 126 provided on the tractor 120 serves as drawbar rotation point for the drawbar 130, thus providing an articulated connection between tractor 120 and carriage 140.

The tractor 120 comprises two tracks 121, 122, which can be individually driven by means of respective motors 123, 124. Thus a hydrostatic drive configuration for the tractor is adopted, where individual pumps and their respective motors control the speeds of individual tracks. The track speeds are individually variable in order to steer the tractor.

The carriage 140 is, in a similar way, provided with two tracks 141, 142, which are also individually driveable by means of respective motors 143, 144.

The carriage 140 can be provided with means 146 for rotatably mounting a chassis (not shown) or a load (not shown).

During straight ahead motion, all four tracks 121, 122, 141, 142 nominally move at the same speed (assuming equal track slip). Ideally during this motion, the load and torque on the drawbar 130 will be close to zero (ideally 0kN). This will indicate that each track is providing a similar tractive effort and thereby sharing the drive power distribution equally to the four tracks.

A control system that only controls track speed, will however, be unable to control the load in the vehicle drawbar 130. This drawbar load can (in practice and particularly on hard i.e. tarmac surfaces) 'wind-up' i.e. increase to a large positive or negative (tension or compression) value or display a torque as a result of an imbalance of tractive effort between the carriage track motors and tractor track motors. Any tractive effort imbalance in the track drives, reduces the load carrying capabilities of the vehicle, as one track 'fights' against another. Reducing or eliminating this un-even tractive effort distribution is the purpose of this invention.

Be it noted in this connection that arrows 160, 161, 162, 163 could also symbolize a driving power provided by the respective motors 123, 124, 143, 144. In case of homogeneous terrain over which the vehicle moves, arrows 160, 161, 162, 163 can symbolize either speed or power.

In the situation shown in figure 1 (straight ahead motion), also a force 130b acting transversely on the drawbar 130 will be close to zero (again ideally 0kN). Also, as immediately follows from the figure, for straight ahead motion the angle between tractor 120 and carriage 140 (or, in other words the angle between the longitudinal axes of symmetry of the tractor and the longitudinal extension of the drawbar 130) will be zero.

The invention lies in the monitoring of the longitudinal force 130a, the transverse force 130b and the angle between tractor and carriage, and in adjusting the drive power provided by respective motors 123, 124, 143, 144 accordingly.

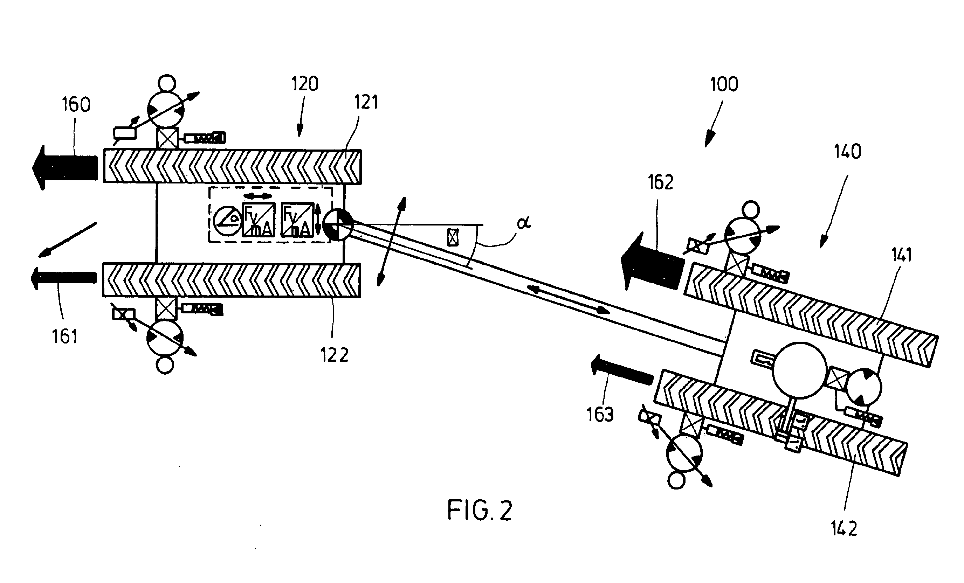

In order to monitor the longitudinal force 130a acting on the drawbar 130, the transverse force 130b acting on the drawbar and the angle between tractor 120 and carriage 140, there are provided load cells 170, 172 and an angular sensor 174. In the depiction in figures 1 and 2, load cells and sensor are provided on the tractor 120. This is, however, only a preferred location in the vicinity of fifth wheel coupling 126.

While the angular sensor 174 needs to be located at the axis of rotation i.e. the fifth wheel coupling, the load cells or alternatively strain gauge sensors could be mounted on the drawbar itself or at the point of attachment of the carriage to the drawbar or at the fifth wheel coupling. The sensors need to sense both drawbar tension/compression and drawbar torque or transverse force.

Load cell 170 serves to determine longitudinal force 130a. Load cell 172 serves to determine transverse force 130b. The angular sensor 174 serves to determine the angle a between the tractor and the carriage.

Figure 2 depicts the situation in which the articulated vehicle 100 performs a left term. Similar observations would, of course, be valid in case of a right term.

As can be indicated by different thicknesses of arrows 160, 161 and 162, 163, the speeds of tracks 160 and 162 are larger than those of tracks 161, 162. This provision of different speeds for right and left tracks enables the articulated vehicle 100 to perform a left turn. By means of controlling the track speeds on the basis of the signals provided by load cells 170, 172 and angular sensor 174, the respective track speeds 160, 161, 162, 163 can be chosen so that longitudinal force 130a and transverse force 130b acting on load bar 130 can be minimized, ideally again be brought close to zero. Also, it is possible to control speeds 160, 161, 162, 163 in such a way as to provide desired non-zero values for the longitudinal force 130a and/or the transverse force 130b, for example in case of a load shifting between the respective tracks being required.

Be it noted that it is conceivable to use transmission pressure sensors in place of the load cells 170, 172 in order to achieve the same effects as described above.

Also, systems using hydraulic pressure distribution by orifices and control valves, together with the angle sensor to provide tractive effort balancing and speed control in turns without the need for load cells are possible.

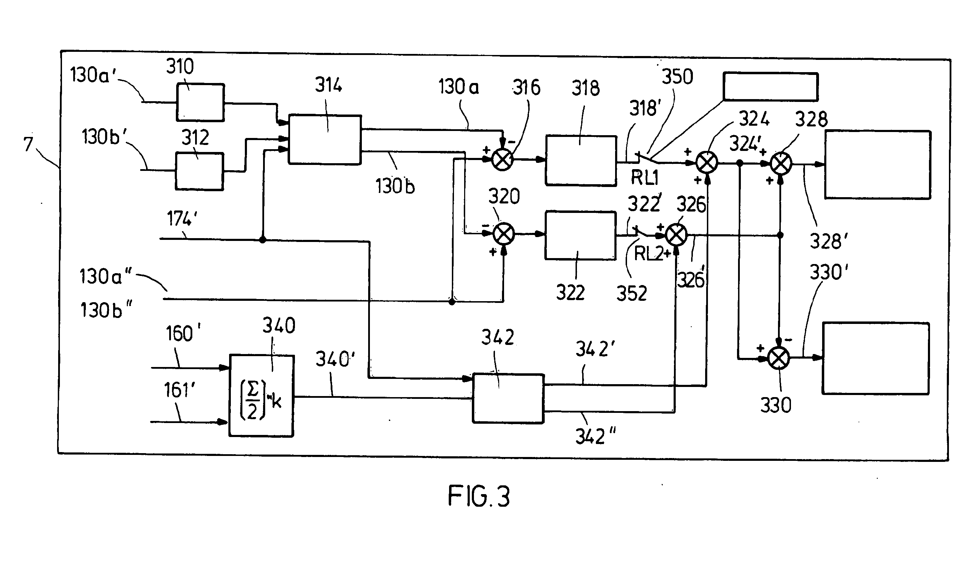

Figure 3 shows a preferred embodiment of a control scheme for carriage track speed control, with which the invention can be implemented. This control scheme can be implemented in a computer 160 which can be located at any suitable position on the vehicle.

A longitudinal load cell force 130a' corresponding to the longitudinal force 130a acting on the drawbar 130, is passed through a low pass filter 310. A lateral load cell force 130b', corresponding to the lateral force 130b acting on the drawbar 130, is passed through a low pass filter 312. The output signals of low pass filters 310, 312 together with a drawbar angle signal 174' detected by angular sensor 174, are processed in a drawbar force resolution member 314. The output signals of member 314 are the drawbar longitudinal force 130a and the drawbar transverse force 130b. The (actual) longitudinal force 130a is, together with a desired longitudinal 130a" force, for example 0kN, input to an error generator 316, which generates a differential signal which is input into longitudinal force controller element 318. In a similar manner the (actual) transverse force 130b is, together with a desired transverse force 130b", again for example 0kN input to an error generator 320, which issues a differential signal which is input into a transverse force controller element 322.

At the same time, the values for the front right track speed 160' and the front left track speed 161' are input into an element 340 for generating a signal 340' representing the mean tractor track speed. This signal 340' is, together with the drawbar angle signal 174', input into a carriage track speed resolution element 342, which generates a carriage mean track speed component 342' and a carriage contra rotate track speed component 342".

The output signal 318' from longitudinal force controller element 318 and the carriage mean track speed component 342' are input into an additive member 324. The output signal 322' of transverse force controller 322 is, together with carriage contra rotate track speed component 342" input into an additive element 326. These additive elements provide command-feedforward in the control system (i.e. they estimate the required track speeds from the vehicle speed demand and turn angle and 'feed-forward' this demand to the tracks in addition to the closed loop load controller outputs) to improve the overall response of the control system.

The output signal 324' from additive element 324 and the output signal 326' from additive element 326 are input into a further additive element 328, which generates a rear right track motor displacement signal for 328' for motor 143.

Also, the output signal 324' from additive element 324 and the output signal 326' from additive element 326 are input into an additive element 330 for generation of a rear left track motor displacement signal 330' for motor 144.

Relay elements 350, 352 are provided for signals 318', 322' to be able to provide a differential lock. Relay elements 350, 352 are provided for signals 318', 322' to be able to provide a differential lock. This mechanism is activated by the operator during periods when one or more tracks pass over extremely slippery patches of ground i.e. hollows filled with quicksand, when the normal even tractive effort distribution would cause the affected tracks to slip. In this instance, operation of the differential lock drives the tracks via the command feedforward signal only, independent of load cell control, preventing track slip and allowing the tractive effort to shift to the tracks having good ground conditions.

## Claims

1. Method for controlling the motion of an articulated vehicle (100) with at least four driven tracks (121, 122, 141, 142), each driven track being provided with individual drive means (123, 124, 143, 144), the articulated vehicle comprising a tractor (120) and a carriage (140) articulately connected to one another by means of a drawbar (130), the tractor (120) and the carriage (140) each having at least two of the at least four driven tracks (121, 122, 141, 142),
**characterized by** the following steps:
- determining the angle (α) between the tractor (120) and the carriage (140),
- determining a force acting longitudinally on the loadbar (130),
- determining a force acting transversely on the loadbar (130), and
- controlling the individual drive means (123, 124, 143, 144) of the driven tracks on the basis of the determined angle (α), the longitudinally acting force and the transversely acting force.

2. Method according to claim 1, wherein, if it is determined that the angle (α) between the tractor (120) and the carriage (140) is zero or smaller than a threshold value, the individual drive means (123, 124, 143, 144) of the driven tracks (121, 122, 141, 142) are controlled in such a way that the longitudinally acting force and the transversely acting force are zero or smaller than a threshold value.

3. Method according to claim 1 or 2, wherein the longitudinal and transversely acting forces are determined by means of load cells (170, 172) arranged on or at at least one end of the drawbar (130).

4. Articulated vehicle with at least four driven tracks, each driven track being provided with individual drive means(123, 124, 143, 144), the articulated vehicle comprising a tractor (120) and a carriage(140) articulately connected to one another by means of a drawbar (130), the tractor (120) and the carriage (140) each having at least two of the at least four driven tracks (121, 122, 141, 142),
**characterized by**
- means (174) for determining the angle (α) between the tractor (120) and the carriage (140),
- means (172) for determining a force acting longitudinally on the loadbar (130),
- means (170) for determining a force acting transversely on the load bar (130), and
- means (160) for controlling the individual drive means (123, 124, 143, 144) of the driven tracks on the basis of the determined angle (α), the longitudinally acting force and the transversely acting force.

## Patentansprüche

1. Verfahren zum Steuern der Bewegung eines Gelenkfahrzeugs (100) mit mindestens vier angetriebenen Gleisketten (121, 122, 141, 142), wobei jede Gleiskette mit individuellen Antriebsmitteln (123, 124, 143, 144) versehen ist, wobei das Gelenkfahrzeug eine Zugmaschine (120) und einen Wagen (140) aufweist, welche gelenkig miteinander mittels einer Zugstange (130) verbunden sind, wobei die Zugmaschine (120) und der Wagen (140) jeweils mindestens zwei der mindestens vier angetriebenen Gleisketten (121, 122, 141, 142) besitzen,
**gekennzeichnet durch** die folgenden Schritte:
- Bestimmen des Winkels (α) zwischen der Zugmaschine (120) und dem Wagen (140),
- Bestimmen einer in Längsrichtung auf die Laststange (130) wirkenden Kraft,
- Bestimmen einer in Querrichtung auf die Laststange (130) wirkenden Kraft,
- Steuern der individuellen Antriebsmittel (123, 124, 143, 144) der angetriebenen Gleisketten in Abhängigkeit des bestimmten Winkels (α), der in Längsrichtung wirkenden Kraft und der in Querrichtung wirkenden Kraft.

2. Verfahren nach Anspruch 1, wobei, falls festgestellt wird, dass der Winkel (α) zwischen der Zugmaschine (120) und dem Wagen (140) Null oder kleiner als ein Schwellenwert ist, die individuellen Antriebsmittel (123, 124, 143, 144) der angetriebenen Gleisketten (121, 122, 141, 142) auf derartige Weise gesteuert werden, dass die in Längsrichtung wirkende Kraft und die in Querrichtung wirkende Kraft Null oder kleiner als ein Schwellenwert sind.

3. Verfahren nach Anspruch 1 oder 2, wobei die in Längsrichtung und Querrichtung wirkenden Kräfte mittels Kraftaufnehmern (170, 172) bestimmt werden, welche auf oder an mindestens einem Ende der Zugstange (130) angeordnet sind.

4. Gelenkfahrzeug mit mindestens vier angetriebenen Gleisketten, wobei jede Gleiskette mit individuellen Antriebsmitteln (123, 124, 143, 144) versehen ist, wobei das Gelenkfahrzeug eine Zugmaschine (120) und einen Wagen (140) aufweist, welche gelenkig miteinander mittels einer Zugstange (130) verbunden sind, wobei die Zugmaschine (120) und der Wagen (140) jeweils mindestens zwei der mindestens vier angetriebenen Gleisketten (121, 122, 141, 142) besitzen, **gekennzeichnet durch**
- Mittel (174) zum Bestimmen des Winkels (α) zwischen der Zugmaschine (120) und dem Wagen (140),
- Mittel (172) zum Bestimmen einer in Längsrichtung auf die Laststange (130) wirkenden Kraft,
- Mittel (170) zum Bestimmen einer in Querrichtung auf die Laststange (130) wirkenden Kraft,
- Mittel (160) zum Steuern der individuellen Antriebsmittel (123, 124, 143, 144) der angetriebenen Gleisketten in Abhängigkeit des bestimmten Winkels (α), der in Längsrichtung wirkenden Kraft und der in Querrichtung wirkenden Kraft.

## Revendications

1. Procédé de commande du mouvement d'un véhicule articulé (100) comportant au moins quatre chenilles entraînées (121, 122, 141, 142), chaque chenille entraînée étant munie de moyens d'entraînement individuels (123, 124, 143, 144), le véhicule articulé comprenant un tracteur (120) et une remorque (140) raccordés de façon articulée l'un à l'autre par le biais d'une barre d'attelage (130), le tracteur (120) et la remorque (140) comportant chacun au moins deux des au moins quatre chenilles entraînées (121, 122, 141, 142), **caractérisé par** les étapes suivantes :
- déterminer l'angle (α) entre le tracteur (120) et la remorque (140),
- déterminer une force agissant longitudinalement sur la barre de support (130),
- déterminer une force agissant transversalement sur la barre de support (130), et
- commander les moyens d'entraînement individuels (123, 124, 143, 144) des chenilles entraînées en fonction de l'angle (α), de la force agissant longitudinalement et de la force agissant transversalement déterminés.

2. Procédé selon la revendication 1, dans lequel, s'il est déterminé que l'angle (α) entre le tracteur (120) et la remorque (140) est nul ou inférieur à une valeur limite, les moyens d'entraînement individuels (123, 124, 143, 144) des chenilles entraînées (121, 122, 141, 142) sont commandés de telle sorte que la force agissant longitudinalement et la force agissant transversalement soient nulles ou inférieures à une valeur limite.

3. Procédé selon la revendication 1 ou 2, dans lequel les forces agissant longitudinalement et transversalement sont déterminées au moyen de dynamomètres (170, 172) disposés sur ou au niveau d'au moins une extrémité de la barre d'attelage (130).

4. Véhicule articulé comportant au moins quatre chenilles entraînées, chaque chenille entraînée étant munie de moyens d'entraînement individuels (123, 124, 143, 144), le véhicule articulé comprenant un tracteur (120) et une remorque (140) raccordés de façon articulée l'un à l'autre par le biais d'une barre d'attelage (130), le tracteur (120) et la remorque (140) comportant chacun au moins deux des au moins quatre chenilles entraînées (121, 122, 141, 142),
**caractérisé par** :
- des moyens (174) pour déterminer l'angle (α) entre le tracteur (120) et la remorque (140),
- des moyens (172) pour déterminer une force agissant longitudinalement sur la barre de support (130),
- des moyens (170) pour déterminer une force agissant transversalement sur la barre de support (130), et
- des moyens (160) pour commander les moyens d'entraînement individuels (123, 124, 143, 144) des chenilles entraînées en fonction de l'angle (α), de la force agissant longitudinalement et de la force agissant transversalement déterminés.
